# EUROPEAN PATENT SPECIFICATION

(11) **EP 3 060 091 B1**
(45) Date of publication and mention of the grant of the patent: **13.09.2017**
(21) Application number: 14796846.5
(22) Date of filing: 20.10.2014
(51) Int. Cl.: A47J 43/044

(54) **KITCHEN MACHINE WITH SPLASH GUARD**
KÜCHENMASCHINE MIT SPRITZSCHUTZ
ROBOT DE CUISINE À ÉLÉMENT ANTI-ÉCLABOUSSURE

(30) Priority: 21.10.2013 GB 201318545
(43) Date of publication of application: 31.08.2016
(73) Proprietor: Kenwood Limited, Havant, Hampshire PO9 2NH (GB)
(72) Inventor: MULLEN, Darren, Havant, Hampshire PO9 2NH (GB)
(74) Representative: Hector, Annabel Mary
(86) International application number: PCT/GB2014/053130
(87) International publication number: WO 2015/059455

(56) References cited:
- DE-A1- 3 346 147
- GB-A- 2 459 309
- US-A- 5 893 640

## Description

This invention relates to kitchen machines, and it relates more particularly to a class of kitchen machines that can be set up by a user to operate either as a hand mixer or as a stand mixer.

Such machines tend to be called "hand/stand mixers", and they are extremely versatile appliances. However, such machines lack some of the sophistication of dedicated stand mixers, which commonly utilise a planetary drive system to move the selected mixing tool(s) through foodstuffs placed in a mixing bowl; thereby providing a powerful and efficient mixing capability. Typically, with a hand/stand mixer, the machine is configured, when set up as a stand mixer, to drive the mixing tool(s) in simple rotation, but with the axis of rotation offset from the centre of the mixing bowl; the desired planetary mixing motion being simulated by rotating the bowl about its axis whilst the mixing tool(s) rotate about the offset axis. DE3346147 (A1) discloses a motor-driven multi-purpose kitchen machine having a stand, and an operating container in the form of a stirring bowl mounted rotatably on the base of said machine.

It is known to be desirable for stand mixers to be fitted with splash guards to prevent unwanted ejection of foodstuffs from the mixing bowl during the mixing process. However, with a hand/stand mixer, the relative movement between the bowl and the rest of the machine presents difficulties in mounting and locating such a guard. This invention aims to reduce or eliminate such difficulties.

According to the invention, there is provided a kitchen machine comprising a hand/stand mixer consisting of a hand mixer body housing an electric motor and having an underside presenting at least one drive socket adapted to receive a shanked mixing tool whereby the tool can be driven in rotation about an axis extending along its shank; the machine further comprising a stand arrangement including a cradle configured to support said body for use as a stand mixer; the machine further comprising a mixing bowl and said arrangement having means to support said mixing bowl in a position such that said at least one tool can depend into the bowl and means for rotating the bowl about an axis offset from that of the shank of said at least one tool; characterised by the further provision of a splash guard and attachment means for temporarily attaching the splash guard to said cradle, thereby to substantially cover said bowl with said splash guard during a mixing operation.

In preferred embodiments of the invention, the attachment means comprises co-operative components carried by said cradle and said splash guard and configured for relative linear sliding engagement of said splash guard to said cradle. In such circumstances, it is further preferred that said co-operative components of the attachment means are configured to latch the splash guard securely to the cradle for operation of the kitchen machine as a stand mixer.

In some embodiments of the invention, the splash guard comprises a self-supporting and substantially planar covering member, dimensioned to substantially cover said bowl. In some such embodiments, the arrangement is such that the attachment means supports said covering member closely above, but spaced from, the upper lip of the bowl. In other embodiments of the invention, the arrangement is such that the attachment means supports said covering member in light bearing contact with the upper lip of the bowl, in which event it is further preferred that the underside at least, or at least the periphery thereof, of the covering member is formed of or coated with a non-stick, and wear resistant material against which the bowl can run as it rotates.

In some preferred embodiments of the invention, the covering member is formed with an attachment member upstanding therefrom; said attachment member bearing said co-operative attachment components carried by the splash guard.

The covering member is typically linearly slotted to permit said at least one tool to depend therethrough into the bowl and to allow for the relative sliding movement of the covering member and the cradle during fitment of the splash guard.

In order that the invention may be clearly understood and readily carried into effect, one embodiment thereof will now be described, by way of example only, with reference to the accompanying drawings, of which:
Figure 1 shows, in perspective view, a kitchen machine fitted with a splash guard in accordance with one embodiment;
Figure 2 (a) shows, in similar view to Figure 1, the machine of Figure 1 with the splash guard in the process of fitment or removal by means of a first exemplary technique;
Figure 2(b) shows in detail a first form of attachment means for attaching the splash guard to the machine by means of the first exemplary technique;
Figure 3 shows, in similar view to Figure 2(a), the machine of Figure 1 with the splash guard in the process of fitment or removal by means of a second exemplary technique; and
Figure 4 shows how the machine can be opened with the splash guard attached.

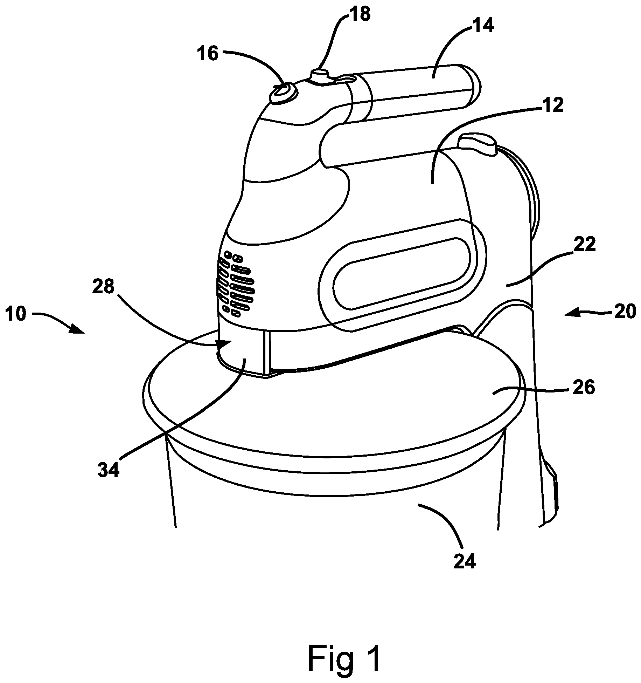

Referring now to Figure 1, a kitchen machine 10 comprising a hand/stand mixer consists of a hand mixer body 12 housing an electric motor (not shown) and having an underside presenting at least one drive socket adapted to receive a shanked mixing tool, whereby the tool can be driven in rotation about an axis extending along its shank. The hand mixer body 12 can be used separately from the remainder of the machine 10, and is formed with a handle 14 that allows the body 12 to be conveniently held and used as a conventional hand mixer.

The body 12 also carries, in conventional fashion, an on/off switch 16 and a speed control slider 18, though it will be appreciated that these components can be placed anywhere on the body 12 convenient for user operation, and can take any desired form. For example, the on/off and speed control functions can be performed by a single device, and rotary rather than sliding operation of the controller may be preferred. In general, the form, number and functionality of the switches and controls such as 16 and 18 is not material.

In order to utilise the body 12 as part of a stand mixer, the machine 10 further comprises a stand arrangement 20 including a cradle 22 configured to support the body 12 above a mixing bowl 24. The arrangement 20 has a foot portion configured to provide a supporting pedestal for the mixing bowl 24 in a position as shown, such that the shanked mixing tool or tools can, when fitted into the drive socket(s) on the underside of the body 12, depend into the bowl 24 to mix foodstuffs placed therein.

The cradle 22 and body 12 comprise co-operating means for supporting the body 12 to the cradle 22 temporarily in a secure manner so that the body 12 is retained upon the cradle during operation of the kitchen machine 10 as a stand mixer. In one example, the means for supporting and securing comprise co-operative components that are provided on the cradle 22 and the body 12 configured for linear sliding engagement of the body 12 relative to the cradle 22. However, it will be appreciated that any means of temporarily securing the body 12 to the cradle 22 may be suitable.

The at least one tool undergoes simple rotation about the axis of its shank and, in order to simulate the planetary mixing movement imparted to the tool(s) of a bespoke stand mixer, the bowl 24 is rotated, on its pedestal, about an axis offset from that of the shank of the at least one tool.

This invention is characterised by the further provision of a splash guard 26 and attachment means 28 for temporarily attaching the splash guard 26 to the cradle 22, thereby to substantially cover the bowl 24 with the splash guard 26 during a mixing operation.

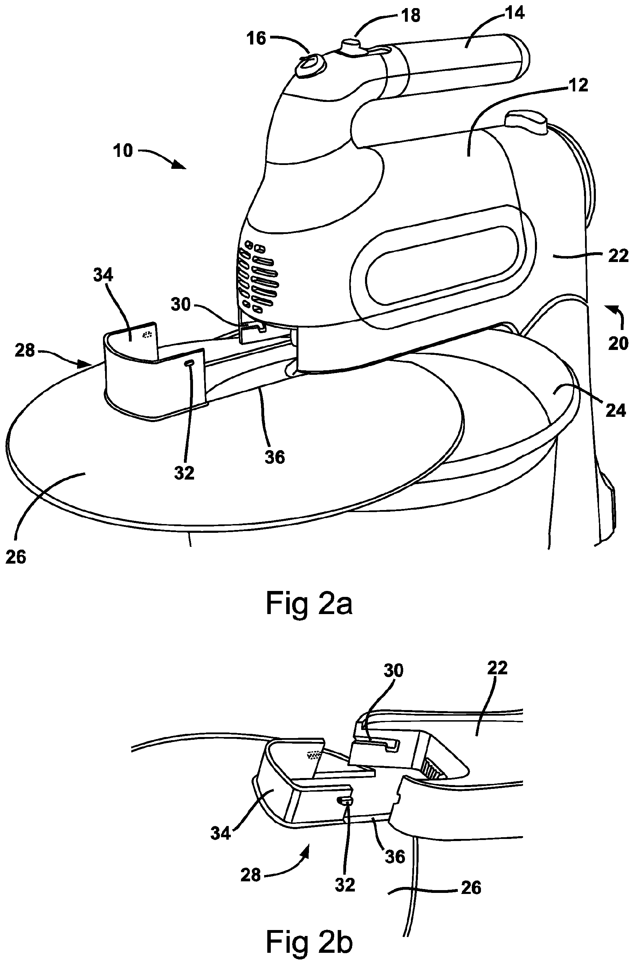

Figures 2(a) and 2(b) represent one preferred embodiment, in which the attachment means 28 comprises co-operative components 30 and 32 carried by the cradle 22 and the splash guard 26 respectively and configured for linear sliding engagement of the splash guard 26 relative to the cradle 22. It is further preferred that the co-operative components 30, 32 of the attachment means 28 are configured to latch the splash guard 26 securely to the cradle 22 during operation of the kitchen machine 10 as a stand mixer.

In this embodiment, and typically, the splash guard 26 comprises a self-supporting and substantially planar covering member, made of food-grade plastics material and dimensioned to substantially cover the bowl 24.

Furthermore, in this embodiment, the arrangement is such that the attachment means 28 supports the splash guard 26 closely above, but spaced from, the upper lip of the bowl 24. In other embodiments, however, the arrangement is such that the attachment means 28 supports the splash guard 26 in light bearing contact with the upper lip of the bowl 24, in which event it is further preferred that the underside at least of the splash guard 26 is formed of, or coated, at least in part, with a non-stick, and wear resistant material against which the bowl 24 can bear as it rotates, at least in a peripheral region where contact may take place. Alternatively, a non-stick material may be provided around the periphery of the bowl.

In this embodiment, the splash guard 26 is formed with an attachment member 34 upstanding therefrom; the attachment member 34 bearing the co-operative attachment components 32 carried by the splash guard 26.

The splash guard 26 is, in this embodiment, linearly slotted, as at 36, to accommodate the shank(s) of the at least one tool, and so permit the tool(s) depend therethrough into the bowl 24. This slot 36 also allows for the relative sliding movement of the splash guard 26 and the cradle 22 during fitment and removal of the splash guard.

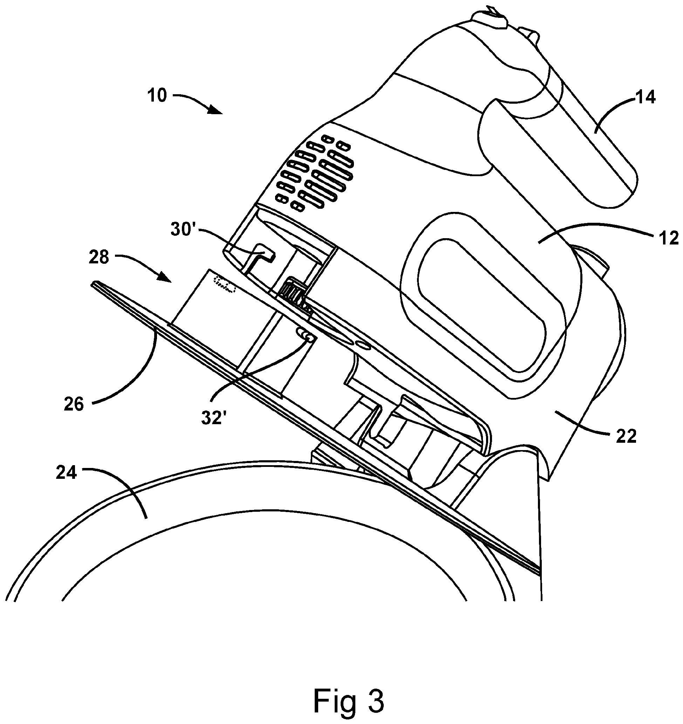

Figure 3 illustrates, in similar view to Figure 2(a), an alternative attachment means and fitting procedure whereby, instead of sliding the splash guard 26 onto the cradle 22 in a plane substantially parallel to that of the splash guard 26, the co-operative components 30' and 32' of the attachment means 28 are formed so as to require an engagement motion substantially perpendicular to the plane of the splash guard 26. The co-operative components 30', 32' can also be configured to accommodate a latching movement, once full engagement has occurred, to latch the splash guard 26 firmly in place to the cradle 22 during the stand mixing operation.

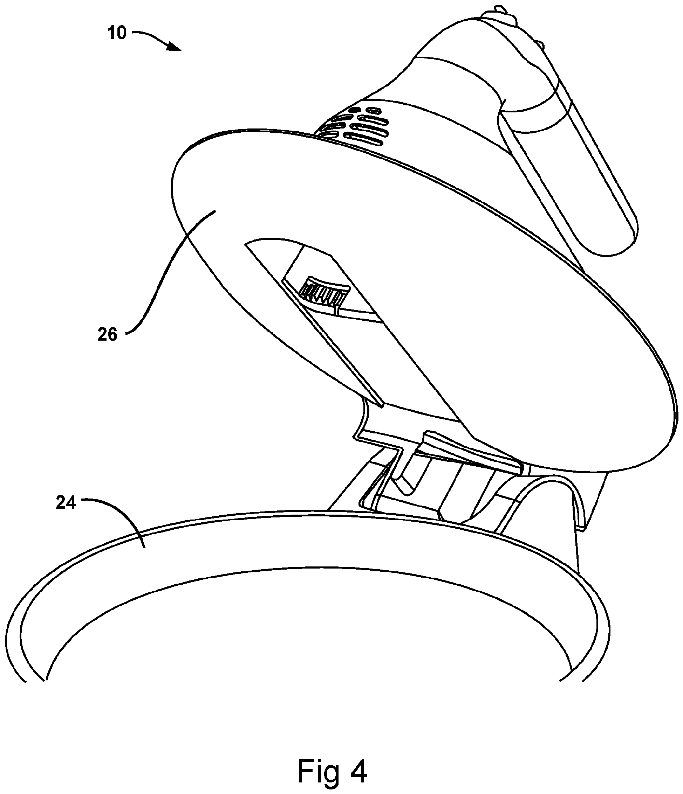

Figure 4 shows how the machine 10 can be opened, whilst in stand mixer mode, with the splash guard 26 latched in place, for example to allow ingredients to be added to the bowl 24 or to permit close inspection of the state of the mixture. In this connection, it will be appreciated that, even if the splash guard 26 is made of transparent or translucent material, it may become fogged or smeared with ingredients, thereby obscuring the user's view. Additionally, the user may wish to exchange one type of mixing tool for another at some point during a mixing process, and it is convenient for this reason also if the machine 10 can be opened with the splash guard 26 (and preferably the body 12 also) in situ.

It will be understood that the present invention has been described above purely by way of example, and modifications of detail can be made within the scope of the invention.

## Claims

1. A kitchen machine (10) comprising a hand/stand mixer consisting of a hand mixer body (12) housing an electric motor and having an underside presenting at least one drive socket adapted to receive a shanked mixing tool whereby the tool can be driven in rotation about an axis extending along its shank; the machine (10) further comprising a stand arrangement (20) including a cradle (22) configured to support said body (12) for use as a stand mixer; the machine (10) further comprising a mixing bowl (24) and said arrangement having means to support said mixing bowl (24) in a position such that said at least one tool can depend into the bowl (24) and means for rotating the bowl (24) about an axis offset from that of the shank of said at least one tool; **characterised by** the further provision of a splash guard (26) and attachment means (28) for temporarily attaching the splash guard (26) to said cradle (22), thereby to substantially cover said bowl (24) with said splash guard (26) during a mixing operation.

2. A kitchen machine (10) according to claim 1, wherein said attachment means (28) comprises co-operative components (32) carried by said cradle (22) and said splash guard (26) and configured for relative linear sliding engagement of said splash guard (26) to said cradle (22).

3. A kitchen machine (10) according to claim 2, wherein said co-operative components (32) of the attachment means (28) are configured to latch the splash guard (26) securely to the cradle (22) for operation of the kitchen machine (10) as a stand mixer.

4. A kitchen machine (10) according to any preceding claim, wherein the splash guard (26) comprises a self-supporting and substantially planar covering member, dimensioned to substantially cover said bowl (24).

5. A kitchen machine (10) according to claim 4, wherein the arrangement is such that the attachment means (28) supports said covering member closely above, but spaced from, the upper lip of the bowl (24).

6. A kitchen machine (10) according to claim 4, wherein the arrangement is such that the attachment means (28) supports said covering member in light bearing contact with the upper lip of the bowl (24).

7. A kitchen machine (10) according to claim 6, wherein at least a part of the underside at least of the covering member is formed of or coated with a non-stick and/or wear resistant material against which the bowl (24) can bear as it rotates.

8. A kitchen machine (10) according to any one of claims 4 to 7, wherein the covering member is formed with an attachment member (34) upstanding therefrom; said attachment member (34) bearing said co-operative attachment components (32) carried by the splash guard (26).

9. A kitchen machine (10) according to any one of claims 4 to 8, wherein the covering member is linearly slotted to permit said at least one tool to depend therethrough into the bowl (24) and to allow for the relative sliding movement of the covering member and the cradle (22) during fitment of the splash guard (26).

## Patentansprüche

1. Küchenmaschine (10), die einen Hand-/Standmischer umfasst, der aus Folgendem besteht: einem Handmischerkörper (12), der einen Elektromotor aufnimmt und eine Unterseite aufweist, die mindestens einen Antriebsstutzen aufweist, der zur Aufnahme eines Schaftmischwerkzeuges ausgebildet ist, wodurch das Werkzeug um eine Achse, die sich entlang seines Schaftes erstreckt, in Drehung versetzt werden kann; wobei die Maschine (10) ferner eine Ständeranordnung (20) umfasst, die eine Halterung (22) aufweist, die so konfiguriert ist, dass sie den genannten Körper (12) zur Verwendung als Standmischer trägt; wobei die Maschine (10) ferner eine Mischschale (24) umfasst und die genannte Anordnung Folgendes aufweist: ein Mittel, um die genannte Mischschale (24) in einer Position zu tragen, in der das genannte mindestens eine Werkzeug in die Schale (24) herab hängen kann, und ein Mittel zum Drehen der Schale (24) um eine Achse, die von der des Schaftes des genannten mindestens einen Werkzeuges versetzt ist; **gekennzeichnet durch** die weitere Bereitstellung eines Spritzschutzes (26) und eines Befestigungsmittels (28) zum vorübergehenden Anbringen des Spritzschutzes (26) an der genannten Halterung (22), wodurch die genannte Schale (24) mit dem genannten Spritzschutz (26) während eines Mischvorgangs im Wesentlichen bedeckt wird.

2. Küchenmaschine (10) nach Anspruch 1, wobei das genannte Befestigungsmittel (28) zusammenwirkende Komponenten (32) umfasst, die von der genannten Halterung (22) und dem genannten Spritzschutz (26) getragen werden und für einen relativen linearen Gleiteingriff des genannten Spritzschutzes (26) in die genannte Halterung (22) konfiguriert sind.

3. Küchenmaschine (10) nach Anspruch 2, wobei die genannten zusammenwirkenden Komponenten (32) des Befestigungsmittels (28) so konfiguriert sind, dass sie den Spritzschutz (26) sicher in die Halterung (22) einrasten, damit die Küchenmaschine (10) als Standmixer betrieben werden kann.

4. Küchenmaschine (10) nach einem der vorhergehenden Ansprüche, wobei der Spritzschutz (26) ein selbsttragendes und im Wesentlichen ebenes Abdeckelement umfasst, das so bemessen ist, dass es die genannte Schale (24) im Wesentlichen bedeckt.

5. Küchenmaschine (10) nach Anspruch 4, wobei die Anordnung derart beschaffen ist, dass das Befestigungsmittel (28) das genannte Abdeckelement dicht oberhalb, jedoch von der Oberlippe der Schale (24) beabstandet, trägt.

6. Küchenmaschine (10) nach Anspruch 4, wobei die Anordnung derart beschaffen ist, dass das Befestigungsmittel (28) das genannte Abdeckelement in leichten Lagerkontakt mit der Oberlippe der Schale (24) trägt.

7. Küchenmaschine (10) nach Anspruch 6, wobei zumindest ein Teil der Unterseite zumindest des Abdeckelements aus einem klebfreien und/oder verschleißfesten Material gebildet oder damit beschichtet ist, auf das die Schale (24) beim Drehen aufliegen kann.

8. Küchenmaschine (10) nach einem der Ansprüche 4 bis 7, wobei das Abdeckelement mit einem Befestigungselement (34) gebildet ist, das davon aufrecht steht; wobei das genannte Befestigungselement (34) die genannten zusammenwirkenden Befestigungskomponenten (32) trägt, die von dem Spritzschutz (26) getragen werden.

9. Küchenmaschine (10) nach einem der Ansprüche 4 bis 8, wobei das Abdeckelement linear geschlitzt ist, um zuzulassen, dass das genannte mindestens eine Werkzeug dadurch in die Schale (24) herabhängen kann, und um die relative Gleitbewegung des Abdeckelements und der Halterung (22) während der Montage des Spritzschutzes (26) zu ermöglichen.

## Revendications

1. Robot de cuisine (10) comprenant un batteur à main/sur socle consistant en un corps de batteur à main (12) logeant un moteur électrique et composant une face inférieure présentant au moins une prise d'entraînement conçue pour recevoir un outil de mélange à tige, l'outil pouvant être entraîné en rotation autour d'un axe s'étendant le long de sa tige ; le robot (10) comprenant en outre un agencement de socle (20) comprenant un support (22) conçu pour supporter ledit corps (12) en vue d'une utilisation en tant que batteur sur socle ; le robot (10) comprenant en outre un bol de mélange (24) et ledit agencement comportant un moyen permettant de supporter ledit bol de mélange (24) dans une position telle que ledit au moins un outil peut descendre dans le bol (24), et un moyen permettant de faire tourner le bol (24) autour d'un axe décalé par rapport à celui de la tige dudit au moins un outil ; le robot étant **caractérisé en ce qu'**il comprend en outre un élément anti-éclaboussure (26) et un moyen de fixation (28) permettant de fixer temporairement l'élément anti-éclaboussure (26) audit support (22), de manière à couvrir sensiblement ledit bol (24) avec ledit élément anti-éclaboussure (26) pendant une opération de mélange.

2. Robot de cuisine (10) selon la revendication 1, dans lequel ledit moyen de fixation (28) comprend des composants de coopération (32) supportés par ledit support (22) et ledit élément anti-éclaboussure (26), et conçus pour assurer une prise coulissante linéaire relative dudit élément anti-éclaboussure (26) avec ledit support (22).

3. Robot de cuisine (10) selon la revendication 2, dans lequel lesdits composants de coopération (32) du moyen de fixation (28) sont conçus pour verrouiller l'élément anti-éclaboussure (26) de manière sûre au support (22) pour le fonctionnement du robot de cuisine (10) en tant que batteur sur socle.

4. Robot de cuisine (10) selon l'une quelconque des revendications précédentes, dans lequel l'élément anti-éclaboussure (26) comprend un élément de recouvrement autoporteur et sensiblement plan, dimensionné pour recouvrir sensiblement ledit bol (24).

5. Robot de cuisine (10) selon la revendication 4, dans lequel l'agencement est tel que le moyen de fixation (28) supporte ledit élément de recouvrement au-dessus à proximité, mais espacé, du couvercle supérieur du bol (24).

6. Robot de cuisine (10) selon la revendication 4, dans lequel l'agencement est tel que le moyen de fixation (28) supporte ledit élément de recouvrement en léger contact d'appui avec le couvercle supérieur du bol (24).

7. Robot de cuisine (10) selon la revendication 6, dans lequel au moins une partie de la face inférieure de l'élément de recouvrement, au moins, est constituée ou revêtue d'un matériau anti-adhésif et/ou résistant à l'usure contre lequel le bol (24) peut s'appuyer pendant sa rotation.

8. Robot de cuisine (10) selon l'une quelconque des revendications 4 à 7, dans lequel l'élément de recouvrement est formé avec un élément de fixation (34) s'étendant à partir dudit élément de recouvrement ; ledit élément de fixation (34) supportant lesdits composants de fixation de coopération (32) supportés par l'élément anti-éclaboussure (26).

9. Robot de cuisine (10) selon l'une quelconque des revendications 4 à 8, dans lequel l'élément de recouvrement est muni d'une rainure linéaire pour permettre audit au moins un outil de descendre dans ledit bol (24) par ladite rainure, et pour permettre le mouvement coulissant relatif de l'élément de recouvrement et du support (22) pendant le montage de l'élément anti-éclaboussure (26).
